# EUROPÄISCHE PATENTANMELDUNG

(11) **EP 2 494 939 A2**
(43) Veröffentlichungstag der Anmeldung: **05.09.2012**
(21) Anmeldenummer: 12156928.9
(22) Anmeldetag: 24.02.2012
(51) Int. Cl.: A61C 8/00

(54) **Zweiteiliges Implantatsystem zur Verankerung von Zahnersatz**

(30) Priorität: 04.03.2011 DE 102011013093
(71) Anmelder: Champions-Implants GmbH, 55237 Flonheim (DE)
(72) Erfinder: Nedjat, Armin Dr., 55237 Flonheim (DE)
(74) Vertreter: Kodron, Felix

(57) **Zusammenfassung**

Es ist das Ziel des erfindungsgemäßen Implantatsystems die Gefahr des Eintrags von Infektionen in das Implantat zu verringern und eine Vereinfachung im Bezug auf die verwendeten baulichen Komponenten zu erreichen.

Es wird ein Implantatsystem offenbart, bei dem beim ersten Verfahrensschritt des Einsetzens des Implantatgrundkörpers (1), auf diesen Grundkörper bereits ein Gingivaformer (2) mittels einer innenliegenden Schraube aufgesetzt ist. Das heisst, das Grund- und Startbauteil ist das Implantat mit bereits auf dem Implantat (1) fixiertem Gingivaformer (2) zum Einschrauben in den Kiefer. Der Gingivaformer (2) weist nun sowohl über eine spezielle Formgebung den verdrehsicheren formflüssigen Kontakt zum Implantatgewinde auf, als auch eine oberseitige Aufnahme mit einer Innenformgestaltung, die das Ansetzen eines Einschraubwerkzeugs (3) in diesen Gingivaformer ermöglicht.

## Beschreibung

Die Erfindung betrifft ein zweiteiliges Implantatsystem zur Verankerung von Zahnersatz gemäß dem Oberbegriff des Hauptanspruchs 1.

Es ist im Stand der Technik bekannt, Zahnersatz durch ein Zusammenwirken mehrerer baulicher Komponenten und ein mehrstufiges Implantierungsverfahren im Kiefer eines Patienten dauerhaft zu fixieren. Im Stand der Technik wird hierbei beispielsweise in einem ersten Verfahrensschritt mit Hilfe eines speziellen Werkzeugs ein hohler Implantatkörper mit Aussengewinde in den Kiefer eingeschraubt. Es handelt sich hierbei um einen Befestigungskörper, die beispielsweise so ausgeführt sein kann, dass er im unteren Abschnitt eine erste breitere Gewindeform aufweist und in seinem oberen Abschnitt eine zusätzliche Mikrogewindestruktur aufweist.

Nach Einsetzen dieses Implantatkörpers in den Kieferknochen wird im herkömmlichen Implantierungsverfahren der Implantatkörper durch eine Abdeckschraube verschlossen, um das Eindringen von Keimen zu verhindern. Diese erste Konstruktion verbleibt, eine definierte zeitdauer ohne weitere Bearbeitung im Kiefer des Patienten, um so ein erstes stabilisierendes Einwachsen in den Kieferknochen zu ermöglichen.

In einem zweiten Termin wird diese Abdeckschraube wieder von dem Gewindekörper gelöst und statt dessen ein sogenannter Gingivaformer zur Vorbereitung des Zahnfleisches zur Aufnahme des späteren zahnersatzkörpers aufgesetzt. Dieser Gingivakörper ist hierbei in seiner Formgebung bereits an den späteren aufgestezten künstlichen Zahnkörper angelehnt und bewirkt eine entsprechende Anformung des Zahnfleisches in diesem Bereich.

In einem dritten Behandlungstermin wird nun ein Abdruck vorgenommen, in dem der Gingivaformer durch einen sog. Abdruckpfosten ersetzt wird, sodass im Zahnmedizinischen Labor die Position des späteren Zahnersatzes im Kiefer nachgestellt werden kann und so der künstliche Zahnersatz zum Aufsetzen auf das Implantat vorbereit werden kann.

Dieser letzte Schritt erfolgt nun im vierten Termin, in dem der im zahnmedizinischen Labor vorgefertigte Zahnersatz nun aufgesetzt wird. Hierfür wird erstmals auf den eingeschraubten Implantatkörper ein sogenanntes Abutment aufgesetzt und in dem Implantat verschraubt. Auf dieses Abutment wird nun im letzten Arbeitsschritt der künstliche Zahnersatz abschließend aufgesetzt.

Es wird hierbei deutlich, dass es sich um ein aufwendiges Verfahren mit einer Vielzahl von Arbeitsschritten handelt, wobei es wesentlich ist, dass zwischen den einzelnen Arbeitssehritten mitunter eine gewisse Einwirkzeit erforderlich ist, insbesondere für das stabilisierende Einwachsen des Implantatkörpers in den Kiefer um zu verhindern, dass bei der weiteren Bearbeitung des Imlantatkörpers dieser nicht wieder im Kiefer gelockert wird.

Das derartig durchgeführte Verfahren hat zudem den Nachteil, dass durch das häufige Auswechseln und Aufsetzen auf dem mit Aussehgewinde versehenen Implantatkörper die Gefahr des Keimeintrags erheblich ist, wodurch Infektionen ausgelöst werden können.

Es ist daher das Ziel des erfindungsgemäßen Implantatsystems eine Lösung vorzuschlagen, die insbesondere für den, Implantatprozess, das heisst, das Verfahren des Einsetzens des Implantatgrundkörpers bis zum Einsetzen des Zahnersatzes deutliche Vereinfachungen bewirkt. Zudem soll das Implantatsystem sowie das Verfahren die Gefahr des Eintrags von Infektionen in das Implantat verringern. Schließlich soll ebenfalls erreicht werden, dass eine Vereinfachung im Bezug auf die verwendeten baulichen Komponenten erreicht werden kann.

Zur Lösung dieser Aufgabenstellung wird ein Implantatsystem mit den konzentrierten Merkmalen des Anspruchs 1 offenbart. Die Unteransprüche weisen hierbei vorteilhafte Ausgestaltungen des Grundsystems auf.

Es wird desweiteren ein Verfahren zur Anwendung anhand des neu gestalteten Implantatsystems beansprucht.

Grundsätzliche Neuerung bei der Gestaltung des Implantats ist hierbei, dass beim ersten Verfahrensschritt des Einsetzen des Implantatgrundkörpers, auf diesen Grundkörper bereits ein Gingivaformer mittels einer innenliegenden Schraube aufgesetzt ist. Das heisst, das Grund- und Startbauteil ist nicht lediglich das Implantat mit den Aussengewinden, sondern das Implantat mit bereits auf dem Implantat fixierte Gingivaformer zum Einschrauben in den Kiefer.

Hierbei ist insbesondere eine Neugestaltung des aufgesetzten Gingivaformers erfolgt, der nun sowohl über eine spezielle Formgebung den verdrehsicheren formflüssigen Kontakt zum Implantatgewinde aufweist, als auch eine oberseitige Aufnahme mit einer Innenformgestaltung, die das Ansetzen eines Einschraubwerkzeugs in diesen Gingivaformer ermöglichte.

Das heisst, ein grundlegendes neues Herangehen besteht darin, dass der Einschraubvorgang des Implantats in den Kieferknochen nicht wie bisher üblich lediglich durch ein Einschrauben des Implantatkörpers mit Aussengewinde erfolgt, sondern dass dieser Implantatkörper bereits mit dem Gingivaformer durch eine in dem Implantat in einem Innengewinde geführte Halteschraube verbunden ist.

Dies hat mehrere vorteilhafte Aspekte. Zum einen ist es so möglich, beim Einsetzvorgang des Implantates dieses direkt mit Gingivaformer durch das geöffnete Zahnfleisch des Patienten in den Kiefer einzusetzen. Auf diese Weise kann bei sachgemäßer Anwendung ein nachträgliches Aufsetzen des Gingivaformer und somit ein eventuelles Eindringen von Keime vermieden werden.

Ein weiterer Aspekt ist, dass durch den aufgesetzten Gingivaformer und die somit in das hülsenförmige Implantat eingesetzte Befestigungsschraube das Implantat selbst bereits deutlich stabilisiert wird. Das heisst, der als Hohlkörper ausgebildete Implantatkörper wird durch den aufgesetzten Gingivaformer sowie die darin verlaufende Schraube stabilisiert und gegen eine eventuelle Verformung beim Einschrauben in den Kieferknochen gesichert. Dies ist insbesondere bei Schmal ausgeführten Implantatkörpern geringem Durchmessers deutlich vorteilhaft, da diese durch die Spannungen beim Einschraubvorgang beschädigt werden können.

Es ist zudem ein deutlicher Vorteil, dass durch diese Konstruktion des einzusetzenden Implantats mit bereits aufgesetztem Gingivaformer ein späteres Einsetzen dieses Gingivaformers erst nach einer Einheilphase des Implantats nicht mehr erforderlich ist. Das heisst, der Gingivaformer wird direkt mit dem Implantat aufgesetzt und das Zahnfleisch entsprechend um den Gingivaformers herumgelegt, ohne das dieses erst in einem zweiten Arbeitsschritt erfolgen muss, Auf diese Weise wird erreicht, dass eine deutliche Zeitersparnis zum bisherigen Verfahren erreicht wird.

Ein weiterer vorteilhafter Effekt ist, dass das Innengewinde des Implantats auf diese Weise geschont und nicht durch das häufigere Herausnehmen der Befestigungsschraube verformt wird, so dass die Gefahr für die spätere Verbindungsschraube Abutment-Implantatkörper sich zu lockern oder sogar zu brechen, deutlich reduziert werden kann.

Konstruktiv ist hierbei der Gingivaformer in einer beispielhaften Bauform an seinem unteren in das Implantat ergreifenden Abschnitt mit einer sechskantmutterförmig sechseckige Aussenkontur ausgebildet, die in eine entsprechende als Negativ hierzu ausgebildete Innenkontur im oberen Abschnitt des Implantatgrundkörpers eingesetzt werden kann. Das heisst, der Gingivaformer ist formschlüssig durch seine in etwa sechskantmutterartige Aussenkontur an seinem unteren Ende in die entsprechend geformte Aufnahme im Implantatkörper eingesetzt. Die abschließende Fixierung erfolgt nun durch eine den Gingivaformers durchgreifende Schraube, die in ein Innengewinde im Implantatkörper eingreift und so den Gingivaformer fest mit diesem Implantat verbindet.

Auf diese Weise ist es nun möglich, durch Krafteinleitung in den Gingivaformer den Schraubvorgang des Implantatkörpers in den Kiefer vorzunehmen. Durch die Aussenkontur des Gingivaformers im Verbindungsbereich zum Implantat, die in die entsprechend geformte Aufnahme auf der Innenseite des Implantatkörpers eingreift, kann die zum Einschrauben erforderliche Rotationsbewegung über den Gingivaformen in den Implantatkörper eingebracht werden. Hierfür ist es allerdings zudem erforderlich, dass auch der Gingivaformer in seiner oberen Aufnahme ein entsprechendes formschlüssige Eingreifen eines Werkzeuges ermöglicht. In der beispielhaften Bauform wird dies erreicht durch eine ebenfalls in etwa sechskantmutterförmige Innenkontur im oberen Abschnitt des hülsenförmigen Gingivaformers, in die ein Werkzeug oberseitig eingreifen kann.

Eine dritte Funktion erfüllt der Gingivaformer als Haltekörper für einen Abdruckpfosten, der für den Abdruck für die Herstellung des spätere Zahnersatzes im zahnmedizinischen Labor erforderlich ist. Für diese Funktion ist es vorgesehen, dass der Gingivaformer in der beispielhaften Bauform über Verbindungsmittel, beispielsweise eine Nut, verfügt, die ebenfalls innerhalb der oberen Aufnahme des Gingivaformers innenseitig verläuft und korrespondiert mit zumindest einem Eingriffkörper, beispielsweise einer umlaufenden Feder bzw. einem umlaufenden Vorsprung, am unteren in den Gingivaformer eingreifenden Zapfen des Abdruckpfostens.

Der Abdruckpfosten wiederum weist hierbei einen unterseitigen Verbindungsadapter zum Gingivaformer auf, der eine spezielle Ausformung aufweist, die mit der oberseitigen Aufnahme des Gingivaformers korrespondiert. Das heisst, der Verbindungsadapter des beispielhafte Abdruckpfostens weist ebenfalls eine etwa sechskantmutterförmige Grundgestalt auf, die bereits in die entsprechende Aufnahme des Gingivaformers formschlüssig eingreift. Unter diesem sechskantmutterförmigen Adapterelement verläuft in etwa waagrecht die umlaufende Feder, die nun beim Aufsetzen des Abdruckpfostens in die entsprechende Nut im oberen Abschnitt des Gingivaformers eingeklinkt werden kann und somit einen sicheren Halt des Abdruckpfostens im Gingivaförmer ermöglicht.

Hieraus ergibt sich, dass nach Abschluss des ersten Arbeitsschrittes bei der Implantierung, nämlich das Einsetzen des Implantatkörpers in den Kiefer gleichzeitig bereits ein Gingivaformer installiert ist sowie ein Abdruckpfosten auf diesem Gingivaformer aufgesetzt werden kann. Das heisst, schon nach dem ersten Arbeitsschritt ist es möglich, den Abdruck für den Einbau des späteren Zahnersatzes vornehmen zu können.

Es ist hierbei ein grundlegender Vorteil des erfindungsgemäßen Verfahrens, dass dieses mit einer geringen Zahl von Bauteilen dadurch realisiert werden kann, dass die miteinander korrespondierenden Aufnahmen und Verbindungadapter gleichbleibend konstruiert werden können, auch wenn beispielsweise die Grundformgebung des Implantatkörpers sowohl in dessen Länge als auch in dessen Durchmesser durchaus variieren kann. Dies ist erforderlich, um das Implantat an die Gegebenheiten im Kiefer eines Patienten anzupassen.

Das heisst, ein Implantatkörper mit 6,5 mm Durchmesser weist in einer zweckmäßigen Bauform der Erfindung die selbe innenliegende Gewindebohrung sowie die selbe hexagonle Aufnahme auf, wie dies beispielsweise bei einem Implantatkörper vorgesehen ist, der lediglich 4,5mm Durchmesser aufweist. Auf diese Weise ist bereits sichergestellt, dass der Gingivaformer in seiner Grundbauform in jeden beliebigen Implantatkörper einsetzbar ist, um immer mit der selben Fixierungsschrabe dort gehalten werden kann.

Das selbe ist für die Verbindung zwischen Abdruckpfosten und Gingivaformer zu sagen. Durch die Grundbauform des Gingivaformers unabhängig von den Implantaten ist es auch möglich, immer mit einer gleichbleibenden Adapterform des Abdruckpfostens zu arbeiten. Es ist hierbei also eine Varietät von Implantaten mit einer minimalen Anzahl von Bauformen des Implantatsystem zu realisieren, wenngleich durchaus Variationen beispielsweise in der Bauhöhe des Gingivaformers angestrebt werden können, um den unterschiedlichen organischen Grundvoraussetzungen des Patienten entsprechend arbeiten zu können.

Es ist in einer besonders vorteilhaften Bauform der vorliegenden Erfindung vorgesehen, die Grundausgangsbauform des Implantats, nämlich die Verbindung aus Implantatkörper mit Aussengewinde zum Einschrauben in den Kiefer sowie aufgesetzten Gingivaformer mit innenliegender Befestigungsschraube bereits mit einem aufgesetzten Werkzeug zum Einschrauben in den Kiefer in einer baulichen Grundeinheit für den ersten Arbeitsschritt vorzulegen. Das heisst, in einem sterilen Aufnahmebehälter ist bereits der Implantatkörper mit aufgesetztem Gingivaformer auf das entsprechende Einsetzwerkzeug aufgesteckt angeordnet.

Dies hat wiederum den wesentlichen Vorteil, dass auf diese Weise die manuelle Berührung des in den Kiefer eingesetzten Abschnitts des Implantats sowie des mit dem Zahnfleisch in Berührung kommenden Gingivaformer vermieden werden kann, da der Implantatkörper mit Gingivaformer nicht berührt werden muss, um den Einsetzvorgang vorzunehmen. Vielmehr kann direkt das Einschraubwerkzeug mit bereits daran aufgesetztem Gingivaformer und Implantkörper aus dem Behälter bzw. von dem Behälter abgenommen werden. Es ist so eine deutliche Verbesserung auf die Gewähr der sterilen Bearbeitung der Implantatbauelemente erreichbar. Auch der formschlüssige Eingriff des Werkzeugendes in den Gingivaformer kann hierbei durch eine Nut-Feder-Verbindung zusätzlich gesichert sein, wie diese für den Abdruckpfosten. bereits beschrieben wurde.

Zum Abschluss des Verfahrens ist es nun lediglich erforderlich, den Gingivaformer nach dem Einheilprozess durch Lösen der innenliegenden Befestigungsschraube vom Implantat zu lösen und durch einen entsprechenden Abutmentkörper zu ersetzen, der als Auflage zum dauerhaften Zahnersatz fungiert.

Es ist hierbei vorteilhaft, dass dieser Abutmentkörper im Verbindingsbereich zum Implantat analog zum Gingivaformer ausgebildet wird, das heißt, in seinem unteren Abschnitt in der Formgebung dem Gingivaformer analog ausgebildet ist und somit ebenfalls in die beispielsweise hexagonale Aufnahme der Innenfläche des Implantats eingreift. Es kann zudem mit der gleichen Befestigungsschraube dieser Abutmentkörper wiederum im Implantat befestigt werden, die bereits zuvor den Gingivaformer im Implantat fixiert hat.

Hieraus resultiert, dass bereits im zweiten Arbeitsschritritt die entsprechenden Maßnahmen zum dauerhaften Einsetzen des Zahnersatzes vorgenommen werden können unter Vermeidung der zuvor genannten mehreren Zwischenarbeitsschritte. Es ist hierbei ebenfalls als grundlegender Verteil zu sehen, dass durch die Reduzierung der Arbeitsschritte ein unbeabsichtigtes Lockern des in den Kiefer eingeschraubten Implantats vermieden werden kann.

Nachfolgend wird die Erfindung anhand von mehreren Abbildungen erläutert.

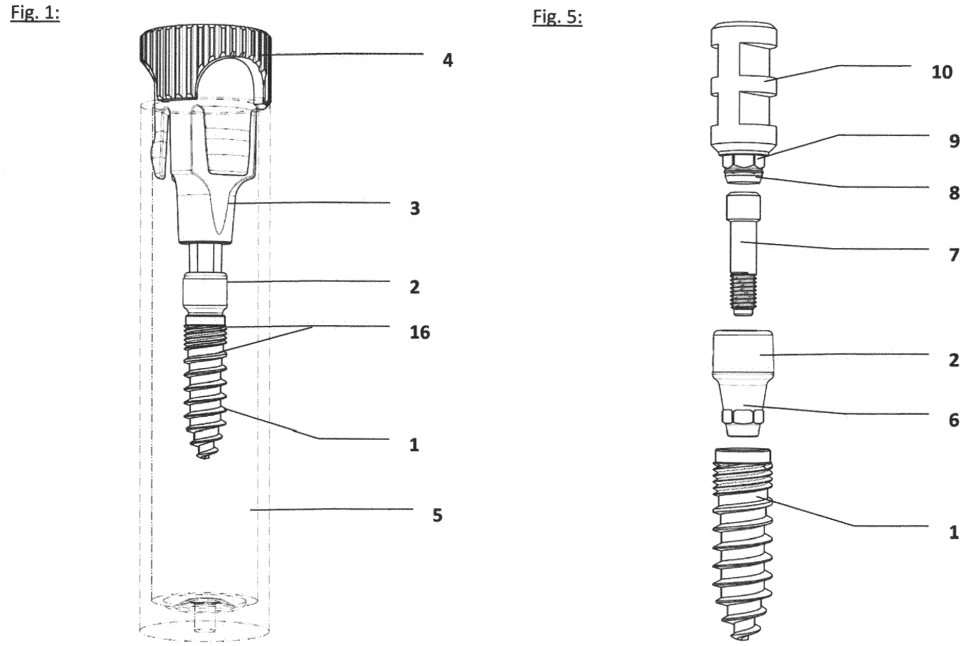

Figur 1 zeigt die Grundkonstruktion des Implantatsystems bestehend aus dem unteren Implantatkörper 1 mit Aussengewinden 16 und auf diesem, bereits aufgesetzten Gingivaformer 2, der bereits auf das Werkzeug 3 zum Einschrauben des Implantats 1 in den Kiefer aufgesteckt worden ist. Es ist hierbei die Aussenkontur eines röhrenförmigen Aufnahmebehälter 5 für diese Grundkonstruktion dargestellt, da die Grundkonstruktion in einer sterilen Verpackung für die Verarbeitung vorbereitet worden ist. Da die Oberseite des Einschraubwerkzeuges 3 gleichzeitig den Verschluss und den Deckel des Aufbewahrungsbehälters 5 darstellt ist es denkbar einfach zu realisieren, das Berühren des Implantats 1 und des Gingivaformers 2 beim Verarbeiten zu vermeiden, da lediglich der obere Bereich des Werkzeugkörpers 3 erfasst und die Röhre 5 von der Grundkonstruktion gelöst werden muss, um den Implantatkörper 1 zum Einschrauben freizugeben.

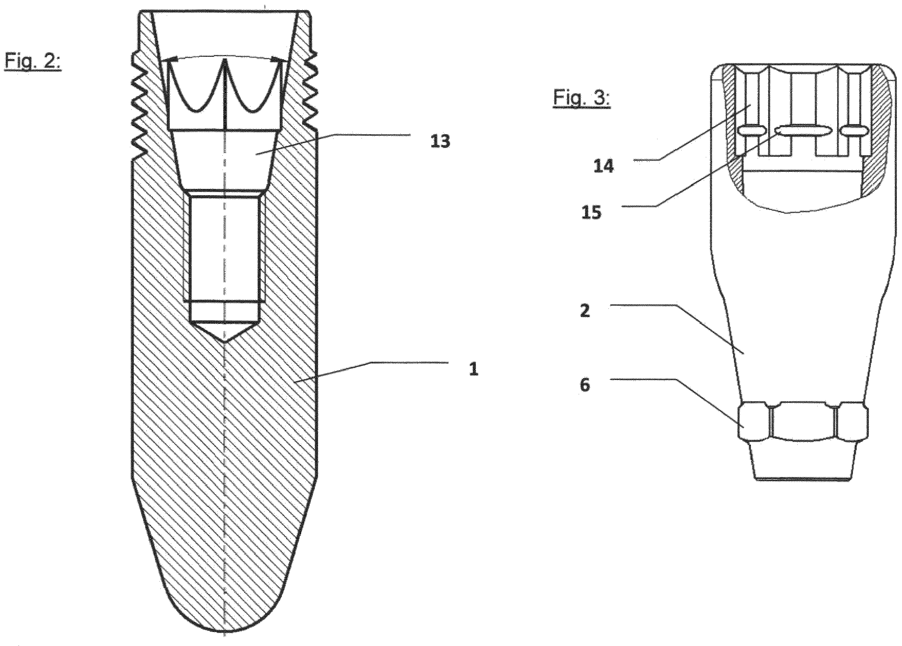

Figur 2 zeigt nun einen Querschnitt durch den Implantatkörper 1 mit entsprechender Innenaufnahme 13 für den unteren Abschnitt des Gingivaformers 2 sowie eine entsprechende Befestigungsschraube 7. Es ist hierbei im oberen Bereich des Hohlraums im Implantat 1 die hexagonale Grundform 13 erkennbar, die mit der hexagonalen Aussenform 6 im unteren Bereich des Gingivaformers 2 korrespondiert, wie diese in Figur 3 dargestellt ist.

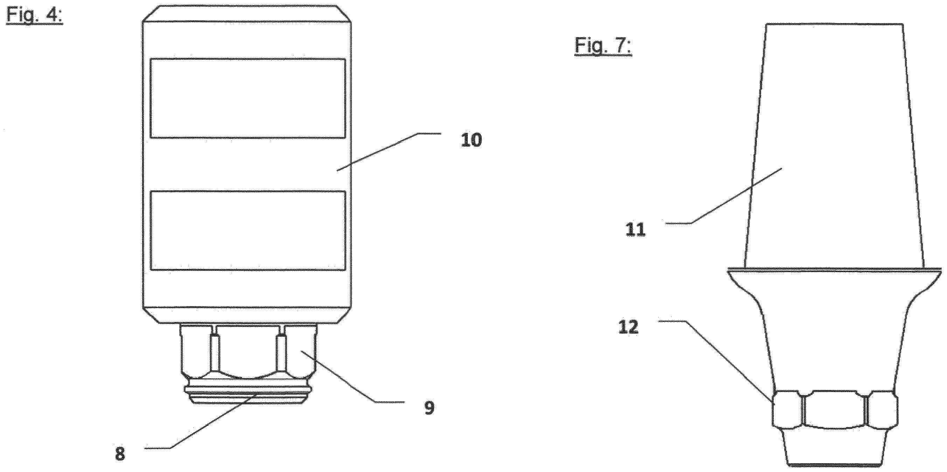

Der Gingivaformer 2 weist hierbei erfinderische und neuartige Merkmale auf. Diese bestehen zum einen aus der hexagonalen Außenkontur 6 im unteren Abschnitt des Gingivaformers 2 wie auch der analog ausgebildeten Innenkontur 14 im oberen Abschnitt des Gingivaformers 2, die als Angriffsfläche für das Einschraubwerkzeug 3 dient. Es ist zudem zeichnerisch dargestellt die im oberen Abschnitt des Gingvaformers 2 innenseitig in etwa waagrecht verlaufende Nut 15 zur Aufnahme eines Befestigungsvorsprungs 8 an der Unterseite des Abdruckpfostens 10 wie dieser in Figur 4 dargestellt ist.

Der Abdruckpfosten 10 nach Figur 4 weist hierbei einen unterseitigen Verbindungsadapter 9 zum Gingivaformer 2 auf, der in seiner Außenkontur einem Sechskantmutterkörper entsprechend ausgebildet hexagonal geformt ist. Unterhalb dieser hexagonalen Grundform ist die umlaufende Befestigungsfeder 8 zum Eingriff in die innenseitige Nut 15 im Gingivaformer 2 erkennbar. So kann eine formschlüssige Verbindung zum Gingivaformer 2 hergestellt werden.

Figur 5 zeigt die Bauteile Implantatkörper 1, Gingivaformer 2, Innenschraube 7 sowie Abdruckpfosten 10 in einer Explosionsdarstellung übereinander angeordnet, um zu verdeutlichen, wie diese Teile ineinander gesetzt werden.

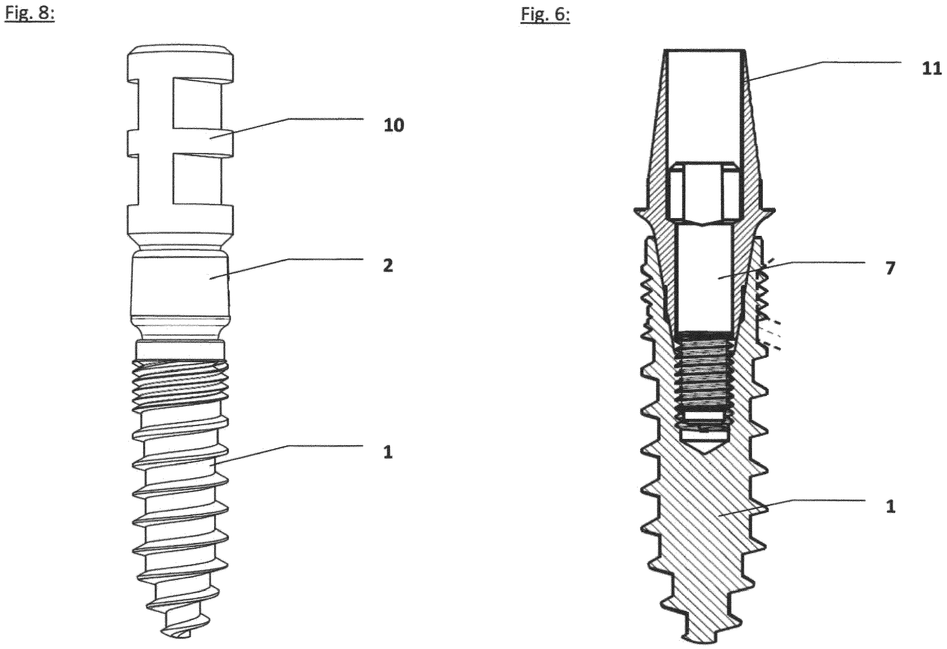

Dies ist ebenfalls durch einen Schnitt der Figur 6 verdeutlicht, der den späteren Einbauzustand des Abutmentkörpers 11 im Implantat 1 darstellt. In dieser Figur ist erkennbar, dass der Abutmentkörper 11 analog zum Gingivaformer 2 in den Implantatkörper 1 eingesetzt und mittels einher Befestigungsschraube 7 mit diesem verbunden ist. Figur 7 zeigt diesen Abutmentkörper 11 mit dem hexagonalen Verbindungsbereich 12 im unteren Abschnitt.

Schließlich ist in Figur 8 die Anordnung des Abdruckpfostens 10 auf dem Gingivaformer 2 dargestellt, der seinerseits auf dem Implantatkörper 1 befestigt ist.

## Patentansprüche

1. Zweiteiliges Implantatsystem zum Einsetzen von Zahnersatz umfassend einen in den Kiefer eingeschraubten Implantatkörper (1) sowie einen auf diesem Implantatkörper (1): befestigten den Zahnersatz tragenden Abutmentkörper (11),
**dadurch gekennzeichnet, dass**
- sein Gingivaformer (2) bereits vor dem Einschrauben auf dem Implantatkörper (1) lösbar befestigt ist,
- wobei zumindest eine formschlüssige Verbindung zwischen Gingivaformer (2) und Implantatkörper (1) besteht
- sowie der Gingivaformer (2) eine oberseitig Aufnahme zur Aufnahme eines Werkzeugs (3) zum Einschrauben des Implantatkörpers (1) mit aufgesetzten Gingivaformer (2) in den Kieferknochen aufweist.

2. Zweiteiliges Implantatsystems nach Anspruch 1,
**dadurch gekennzeichnet, dass**,
der auf dem Implantat (1) aufgesetzten und fixiert Gingivaformer (2) als erste bauliche Grundeinheit des Implantatsystems bereits aufgesetzt auf ein Werkzeug (3) oder ein Adapterelement zu einem Werkzeug zum Einsetzten des Implantatköpers (1) in den Kiefer in einer sterilen Verpackung für den Implantatvorgang angeordnet ist.

3. Zweiteiliges Implantatsystems nach Anspruch 2,
**dadurch gekennzeichnet, dass,**
das Werkzeug (3) oder das Adapterelement zum Werkzeug zum Einsetzten des Implantatköpers (1) in den Kiefer gleichzeitig den Verschluß der sterilen Verpackung (5) für den Implantatkörper (1) mit Gingivaformer (2) bildet.

4. Zweiteiliges Implantatsystem nach Anspruch 1 oder 2,
**dadurch gekennzeichnet, dass**
- der Implantatkörper (1) eine Innengewindebohrung (17) aufweist zur Aufnahme einer Befestigungsschraube (7) zur Verbindung mit dem Gingivaformer (2) und zu einem späteren mit einem Abutmentkörper (11) und
- in seinem oberen Abschnitt zudem eine Inhehkonturformgebung (13) aufweist, die mit einer analogen Aussenkonturformgebung (6, 12) im unteren Abschnitt des Gingivaformers (2) und eines später einzusetzenden Abutmentkörpers (11) korrespondiert, sodass die Aussenkontur (6, 12) des unteren Abschnitts des Gingivaformers (2) und später des Abutmentkörpers (11) in diese Innenkontur (13) im oberen Abschnitt des Implantatkörpers (1) formschlüssig eingreift.

5. Zweiteiliges Implantatsystem nach Anspruch 3,
**dadurch gekennzeichnet, dass**
- die Innenkontur (13) im oberen Abschnitt des Implantatkörpers (1) als hexagonale Innenform ausgebildet ist,
- in die eine hexagonale Aussenkontur (6, 12) am unteren Abschnitt des Gingivaformer (6) sowie des Abutmentkörpers (11) formschlüssig eingreift.

6. Zweiteiliges Implantatsystem nach einem der vorangegangenen Ansprüche,
**dadurch gekennzeichnet, dass**
die Innenbohrung (17) sowie die Innenkontur (13) des Implantatkörpers (1) unabhängig von dessen Bauhöhe und Durchmesser konstant bleibt und somit unabhängig von dieser äusseren Formgebungen des Implantatközpers (1) zur Verbindung mit den entsprechenden Aussenkonturen (6, 12) des Gingivaformers (2) und der Abutmentkörper (11) geeignet ist.

7. Zweiteiliges Implantatsystem nach einem der vorangegangenen Ansprüche,
**dadurch gekennzeichnet, dass**
- der Gingivaformer (2) in seinem oberen Abschnitt eine innenseitige Umlaufende Nut (15) aufweist,
- die korrespondiert mit einer außenseitigen umlaufende Feder (8) an einem in diesen Gingivaformer (2) einzusetzenden Abdruckpfosten (10) zur formschlüssigen Verbindung wischen Gingivaformer (2) und Abruckpfosten (10),
- wobei der Abdruckpfosten (10) über einen unterseitigen Adapterabschnitt (9) verfügt, der ebenfalls eine Außenkontur aufweist, die korrespondiert mit der Innenkontur (6) der oberen Aufnahme im Gingivaformer (2).

8. Verfahren zum Einsetzen von Zahnersatz mittels eines zweiteiligen Implantatsystems durch das Einschrauben eines Implantatkörpers (1), der als Befestigung für den aufzusetzenden Zahnersatz dient,
**dadurch gekennzeichnet, dass**
nach Vorbohren einer Lochs im Kiefer des Patienten ein gleichzeitiges Einschrauben eines Implantatkörpers, (1) mit auf diesem befestigten Gingivaformer (2) erfolgt, wobei das verwendete Werkzeug (3) in eine Aufnahme des Gingivaformers (2) eingreift.

9. Verfahren zum Einsetzen von Zahnersatz mittels eines zweiteiligen Implantatsystems nach Anspruch 7,
**dadurch gekennzeichnet, dass**
direkt nach dem Einschraubvorgang des Implantats (1) das Werkzeug (3) vom Gingivaformer (2) abgenommen und ein Abdruckpfosten (10) formschlüssig in den Gingivaformer (2) eingesetzt sowie ein Abdruck für die Herstellung des Zahnersatzes abgenommen wird.

10. Vorkonfektioniertes Implantatprodukt umfassend:
a) ein steriles Aufnahmegefäß (5) mit oberseitiger Aufnahmeöffnüng,
b) einen Implantatkörper (1) mit auf diesem befestigten Gingivaformer (2) mit oberseitiger Aufnahme für den Eingriff eines Merkzeugs (3),
c) ein in den Gingivaformer (2) eingreifendes Werkzeug (3) bzw. Adapterelement zu einem Werkzeug welches derart ausgebildet ist, dass es auf der Aufnahmeöffnung des Aufnahmegefäßes (5) luftabschließend aufsitzt oder lösbar mit einem die Aufnahmeöffnung verschließenden Deckel verbunden ist.
